# EUROPÄISCHE PATENTANMELDUNG

(11) **EP 3 957 513 A1**
(43) Veröffentlichungstag der Anmeldung: **23.02.2022**
(21) Anmeldenummer: 20192163.2
(22) Anmeldetag: 21.08.2020
(51) Int. Cl.: B60L 53/24, B60L 1/06, B60L 1/00, B60L 50/50, B60L 50/51, B60L 50/60, B60L 53/14

(54) **LADEN VON ENERGIESPEICHERN EINES FAHRZEUGS AN SCHWACHEN ENERGIEVERSORGUNGSNETZEN**

(71) Anmelder: Siemens Aktiengesellschaft, 80333 München (DE)
(72) Erfinder: Gritsch, Christian, 90491 Nürnberg (DE)

(57) **Zusammenfassung**

Die Erfindung betrifft ein Teilbordnetz (1) für ein Fahrzeug (30) wobei das Teilbordnetz (1) mindestens einen Energiespeicher (2) und eine Regelvorrichtung (9) zur Ladung der Energiespeicher (2) des Fahrzeugs (30) aufweist. Zur Verbesserung der Ladung des Energiespeichers wird vorgeschlagen, dass das Teilbordnetz ferner einen Bordnetzanschluss (3) zur Verbindung mit elektrischen Komponenten (31) des Fahrzeugs (30), einen Gleichspannungsanschluss (4) zur Verbindung mit einer landseitigen Ladestation (20) und ein Energieteilnetz (5) aufweist, wobei zwischen dem Bordnetzanschluss (3) und dem Energieteilnetz (5) eine Schaltvorrichtung (6) angeordnet ist, wobei zwischen dem Energiespeicher (2) und dem Energieteilnetz (5) ein Ladegerät (7) angeordnet ist, wobei der Gleichspannungsanschluss (4) mit dem Energieteilnetz (5) elektrisch leitend verbunden ist, wobei das Teilbordnetz (1) mindestens einen Stromrichter (8) aufweist, der wechselspannungsseitig mit dem Energieteilnetz (5) verbunden ist und sowohl als AC/DC Steller als auch als DC/DC Steller betreibbar ist, wobei der Stromrichter (8) mittels der Regelvorrichtung (9) eingerichtet ist, während des Ladevorgangs das Energieteilnetz (5) als Gleichspannungsnetz und während des unabhängigen Betriebs des Fahrzeugs (20) als Wechselspannungsnetz zu betreiben. Die Erfindung betrifft ferner ein Fahrzeug mit einem derartigen Teilbordnetz, eine landseitige Ladestation, sowie ein Ladesystem. Weiter betrifft die Erfindung ein Verfahren zum Betreiben eines derartigen Teilbordnetzes (1) oder eines derartigen Fahrzeugs (20) oder eines derartigen Ladesystems (40), wobei während eines Ladevorgangs der Stromrichter (8) als DC/DC Steller und während des unabhängigen Betriebs als AC/DC Steller betrieben wird.

## Beschreibung

Die Erfindung betrifft ein Teilbordnetz für ein Fahrzeug, insbesondere für ein Wasserfahrzeug, wobei das Teilbordnetz mindestens einen Energiespeicher und eine Regelvorrichtung zur Ladung der Energiespeicher des Fahrzeugs aus einer landseitigen Ladestation aufweist. Die Erfindung betrifft weiter ein Fahrzeug, insbesondere ein Wasserfahrzeug, mit mindestens einem derartigen Teilbordnetz. Ferner betrifft die Erfindung eine landseitige Ladestation, aufweisend einen landseitigen Energiespeicher und einen landseitigen Stromrichter. Weiter betrifft die Erfindung ein Ladesystem aufweisend ein derartiges Teilbordnetz oder ein derartiges Fahrzeug und eine derartige landseitige Ladestation. Die Erfindung betrifft ferner ein Verfahren zum Betreiben eines derartigen Teilbordnetzes oder eines derartigen Fahrzeugs.

Gegenwärtig wird im Bereich von Fahrzeugen, insbesondere bei Fähren und anderen Schiffen, für kurze und mittlere Distanzen, zunehmend der Dieselmotor verdrängt und durch elektrische Antriebssysteme mit Energiespeicher, wie beispielsweise Batterien, ersetzt. Da an den Stellen der landseitigen Ladestationen wie beispielsweise Schiffsanlegestellen oft nur schwache Netze vorhanden sind, an denen die entnehmbare elektrische Leistung beschränkt ist, wird neben dem fahrzeugseitigen Energiespeicher (Batterie) ein solcher auch landseitig angeordnet. In dieser Anordnung stellt der Energienetzbetreiber durch das Energieversorgungsnetz eine kontinuierliche Leistung zur Verfügung, die jedoch nicht ausreicht, um den Energiespeicher des Fahrzeugs, wie beispielsweise des Wasserfahrzeugs, welches nur kurzzeitig anlegt, in angemessener Zeit zu laden. Aus diesem Grunde wird ein landseitiger Energiespeicher kontinuierlich geladen und dessen Energie beim Anlegen des Schiffes vom landseitigen auf den fahrzeugseitige Energiespeicher transferiert.

Dabei wird der landseitige Energiespeicher geladen, indem Wechselspannung aus dem Energieversorgungsnetz in Gleichspannung gewandelt wird. Zum Aufladen des fahrzeugseitigen Energiespeichers wird die Gleichspannung des landseitigen Energiespeichers wieder in Wechselspannung umgewandelt. Mittels Wechselstroms wird dann der fahrzeugseitige Energiespeicher geladen, der dann im Fahrzeug wieder in einen Gleichstrom umgewandelt wird.

Dazu sind landseitig wie fahrzeugseitig eine Vielzahl gleichartiger Komponenten angeordnet, um diesen Energiefluss sicherzustellen.

Der Erfindung liegt die Aufgabe zugrunde, das Laden eines fahrzeugseitigen Energiespeichers zu verbessern.

Diese Aufgabe wird durch ein Teilbordnetz für ein Fahrzeug, insbesondere für ein Wasserfahrzeug gelöst, wobei das Teilbordnetz mindestens einen Energiespeicher, eine Regelvorrichtung zur Ladung der Energiespeicher des Fahrzeugs, einen Bordnetzanschluss zur Verbindung mit elektrischen Komponenten des Fahrzeugs, einen Gleichspannungsanschluss zur Verbindung mit einer landseitigen Ladestation und ein Energieteilnetz aufweist, wobei zwischen dem Bordnetzanschluss und dem Energieteilnetz eine Schaltvorrichtung angeordnet ist, wobei zwischen dem Energiespeicher und dem Energieteilnetz ein Ladegerät angeordnet ist, wobei der Gleichspannungsanschluss mit dem Energieteilnetz elektrisch leitend verbunden ist, wobei das Teilbordnetz mindestens einen Stromrichter aufweist, der wechselspannungsseitig mit dem Energieteilnetz verbunden ist und sowohl als AC/DC Steller als auch als DC/DC Steller betreibbar ist, wobei der Stromrichter mittels der Regelvorrichtung eingerichtet ist, während des Ladevorgangs das Energieteilnetz als Gleichspannungsnetz und während des unabhängigen Betriebs des Fahrzeugs als Wechselspannungsnetz zu betreiben. Weiter wird diese Aufgabe durch ein Fahrzeug, insbesondere ein Wasserfahrzeug, mit mindestens einem derartigen Teilbordnetz gelöst. Die Aufgabe wird ferner durch eine landseitige Ladestation, aufweisend einen landseitigen Energiespeicher und einen landseitigen Stromrichter gelöst, wobei in der elektrischen Verbindung zwischen dem landseitigen Energiespeicher und dem landseitigen Stromrichter ein landseitiger Gleichspannungsanschluss zur Verbindung mit Gleichspannungsanschluss eines derartigen Teilbordnetzes oder eines derartigen Fahrzeugs angeordnet ist, wobei die über den landseitige Stromrichter übertragbare Leistung kleiner ist als die über den landseitiger Gleichspannungsanschluss übertragbare Dauerleistung. Weiter wird die Aufgabe durch ein Ladesystem aufweisend ein derartiges Teilbordnetz oder ein derartiges Fahrzeug und eine derartige landseitige Ladestation gelöst, wobei der landseitige Gleichspannungsanschluss der landseitigen Ladestation mit dem Gleichspannungsanschluss des Teilbordnetzes elektrisch verbunden ist. Die Aufgabe wird ferner durch ein Verfahren zum Betreiben eines derartigen Teilbordnetzes oder eines derartigen Fahrzeugs oder eines derartigen Ladesystems gelöst, wobei während eines Ladevorgangs der Stromrichter als DC/DC Steller und während des unabhängigen Betriebs als AC/DC Steller betrieben wird.

Weitere vorteilhafte Ausgestaltungen der Erfindung sind in den abhängigen Ansprüchen angegeben.

Der Erfindung liegt unter anderem die Erkenntnis zugrunde, dass sich die Effizienz der Ladung erhöhen lässt, wenn die Energieübertragung mittels Gleichspannung erfolgt. Dabei können einige verlustbehaftete Umwandlungsprozesse entfallen. Gleichzeitig können bereits vorhandene Komponenten des Teilbordnetzes oder des Fahrzeugs in unterschiedlichen Betriebsmodi genutzt werden. Der Stromrichter kann dabei während des Ladevorgangs als DC/DC Steller genutzt werden und außerhalb des Ladens, also wenn keine elektrische Verbindung zu einer landseitigen Ladestation besteht, als AC/DC Steller. Der Betrieb ohne Verbindung zu einer Ladestation wird auch als unabhängiger Betrieb bezeichnet, da dieser unabhängig von einer landseitigen Energieversorgung ist.

Dabei wird zwischen den Komponenten unterschieden, die im Teilbordnetz oder Fahrzeug angeordnet sind, wie beispielsweise Stromrichter, Gleichstromsteller und Tiefsetzsteller und der Funktion, die diese Komponenten ausführen können, wie beispielsweise ein DC/DC Steller oder ein AC/DC Steller. So kann beispielsweise ein Stromrichter als DC/DC Steller wie auch als AC/DC Steller betrieben werden.

Für das Laden wird Energie aus dem landseitigen Energiespeicher entnommen und mittels Gleichspannung und Gleichstrom an den Energiespeicher das Teilbordnetzes übertragen. An der landseitigen Ladestation muss daher der landseitige Stromrichter nur noch für die Übertragung der Energie zur Ladung des landseitigen Energiespeichers aus dem Energieversorgungsnetz ausgelegt werden. Die dafür notwendige Leistung ist deutlich geringer als die Ladeleistung für die Fahrzeugladung. Da sich der landseitige Gleichspannungsanschluss zur Übertragung der elektrischen Energie an das Teilbordnetz zwischen landseitigem Stromrichter und landseitigem Energiespeicher befindet, fließt beim Laden kein Strom mehr über den landseitigen Stromrichter. Zum einen spart das elektrische Verluste, zum anderen kann der landseitige Stromrichter deutlich leistungsschwächer und günstiger ausgelegt werden, da aufgrund des schwachen Netzes an der landseitigen Ladestation dort keine hohe Leistung zur Verfügung steht.

Somit braucht der landseitige Stromrichter nur für den kleinen Ladestrom aufgrund des schwachen Landnetzes ausgeführt sein und nicht für den hohen Entladestrom für die schnelle Ladung der Fahrzeugbatterien wie bei bisher bekannten Anwendungen

Vom landseitigen Gleichspannungsanschluss wird dann ein Gleichstrom bei anliegender Gleichspannung an den Gleichspannungsanschluss des Teilbordnetzes übertragen. Diese Gleichspannungsanschluss ist mit einem Energienetz des Teilbordnetzes verbunden. Dieses kann mittels des Stromrichters als Gleichspannungsnetz oder Wechselspannungsnetz betrieben werden. Dazu wird der Stromrichter im ersten Fall während des Ladevorgangs als DC/DC Steller betrieben und im zweiten Fall während des unabhängigen Betriebs als AC/DC Steller. Die Komponente Stromrichter kann dabei je nach Betriebsart des Fahrzeugs, also Ladebetrieb oder unabhängiger Betrieb unterschiedlich betrieben und genutzt werden. Durch diese doppelte Nutzung einer vorhandenen und teuren Komponente kann das Teilbordnetz für das Laden besonders kostengünstig ausgeführt werden.

Ist das Energienetz dreiphasig ausgelegt, weist also drei Leiter auf, so kann es im Falle des Betriebs als Wechselspannungsnetz als dreiphasiges Drehstromnetz betrieben werden. Beim Ladevorgang, wenn es als Gleichspannungsnetz betrieben wird, liegt die Gleichspannung zwischen zwei der drei Leiter an.

Der Stromrichter ist gleichspannungsseitig, das heißt mit seinem Zwischenkreis, mit dem Energiespeicher verbunden. Dies kann direkt geschehen, falls der Stromrichter im Ladegerät angeordnet ist. Alternativ kann der Stromrichter gleichspannungsseitig auch beispielsweise über einen Gleichstromsteller, wie beispielsweise einem Tiefsetzsteller, oder über das Ladegerät, sofern der Stromrichter außerhalb des Ladegerätes angeordnet ist, mit dem Energiespeicher verbunden sein.

Bei einer vorteilhaften Ausgestaltung der Erfindung ist der Stromrichter im Ladegerät angeordnet. Der Stromrichter, der anhängig vom Betrieb zwischen dem Betrieb als DC/DC Steller und AC/DC Steller wechselt, kann dabei durch einen Stromrichter in einem Ladegerät gebildet werden. Dann ist das Ladegerät direkt über das Energienetz mit dem Gleichspannungsanschluss des Teilbordnetzes verbunden. Sofern die Spannung des landseitigen Energiespeichers niedriger ist als die Spannung des Energiespeichers des Teilbordnetzes kann der Stromrichter des Ladegerätes den Ladevorgang steuern oder regeln.

Bei einer weiteren vorteilhaften Ausgestaltung der Erfindung ist im Ladegerät ein Tiefsetzsteller derart an einem Zwischenkreis des Stromrichters angeordnet, dass der Tiefsetzsteller eine am Zwischenkreis anliegende Spannung in eine kleinere Spannung am Energiespeicher umwandelt. In dieser Ausgestaltung kann ein Energiefluss zwischen dem landseitigen Energiespeicher und dem Energiespeicher des Teilbordnetzes unabhängig von der Höhe der Spannung der jeweiligen Energiespeicher durchgeführt werden. Das heißt, die Spannung des landseitigen Energiespeichers kann kleiner, gleich oder größer als die Spannung des Energiespeichers des Teilbordnetzes sein. Mit dieser Anordnung hat man eine größtmögliche Flexibilität und kann mit dem Teilbordnetz an allen Ladestationen mit einer Gleichspannungsübertragung den Energiespeicher unabhängig von der Höhe der Spannung des landseitigen Energiespeichers laden.

Bei einer weiteren vorteilhaften Ausgestaltung der Erfindung weist das Teilbordnetz einen Wechselrichter zur Speisung eines Antriebsmotors auf, wobei der Stromrichter durch den Wechselrichter gebildet wird. Da beim Laden im Allgemeinen der Antriebsmotor nicht in Betrieb ist, kann der Wechselrichter als Stromrichter für die Ladung Steuerung der Ladung verwendet werden. Auch die Steuerung des Energieflusses kann mittels des Wechselrichters vorgenommen werden. Damit werden die bereits im Fahrzeug vorhandenen Komponenten effizient genutzt. Die elektrische Verbindung zwischen Wechselrichter und Antriebsmotor wird dabei vorteilhafterweise beispielsweise mittels eines Motorschalters, der beispielsweise als mechanischer Schalter, Schütz oder Trenner ausgebildet sein kann, getrennt.

Bei einer weiteren vorteilhaften Ausgestaltung der Erfindung weist das Ladegerät einen Gleichstromsteller auf. Durch die Verwendung eines Gleichstromstellers kann auch in dieser Ausgestaltung der Energiefluss zwischen dem landseitigen Energiespeicher und dem Energiespeicher des Teilbordnetzes unabhängig von der Höhe der Spannung der jeweiligen Energiespeicher durchgeführt werden. Das heißt, die Spannung des landseitigen Energiespeichers kann kleiner, gleich oder größer als die Spannung des Energiespeichers des Teilbordnetzes sein. Damit hat man auch in dieser Ausgestaltung eine größtmögliche Flexibilität und kann mit dem Teilbordnetz an allen Ladestationen mit einer Gleichspannungsübertragung den Energiespeicher unabhängig von der Höhe der Spannung des landseitigen Energiespeichers laden.

Die Regelung oder Steuerung des Energieflusses zum Laden des Energiespeichers kann dabei durch den Wechselrichter als Stromrichter oder durch den Gleichstromsteller des Ladegerätes erfolgen.

Bei dem Gleichstromsteller kann dabei als Hochsetzsteller, Tiefsetzsteller oder als eine Kombination aus Hoch- und Tiefsetzsteller ausgebildet sein.

Bei einer weiteren vorteilhaften Ausgestaltung der Erfindung weist das Teilbordnetz einen Gleichrichter auf, der mit dem Wechselrichter einen Frequenzumrichter zur Speisung des Antriebsmotors bildet, wobei der Gleichrichter die Schaltvorrichtung bildet. Auf einen separaten Schalter als Schaltvorrichtung kann verzichtet werden, wenn der Gleichrichter mit schaltbaren Halbleitern ausgestattet ist. Auch in dieser Ausgestaltung kann auf eine zusätzliche Komponente zur Realisierung Schaltvorrichtung verzichtet werden, indem bereits vorhandene Komponenten des Teilbordnetzes für das Laden genutzt werden. Damit arbeitet das Teilbordnetz besonders effizient und kann kostengünstig hergestellt werden.

Dabei kann der Gleichrichter den Bordnetzanschluss und das Energieteilnetz voneinander trennen oder durch die Funktion eines AC/DC Stellers miteinander verbinden und Strom zwischen Energieteilnetz und Bordnetzanschluss austauschen.

Bei einer weiteren vorteilhaften Ausgestaltung der Erfindung ist zwischen dem Energieteilnetz und dem Bordnetzanschluss ein Bordnetzstromrichter angeordnet. Dabei werden während des Ladevorgangs elektrische Komponenten des Fahrzeugs mittels des Bordnetzstromrichters aus dem Energieteilnetz mit elektrischer Energie versorgt. Um sicherzustellen, dass das Bordnetz auch während des Ladevorgangs bei geöffneter Schaltvorrichtung mit elektrischer Energie versorgt wird, kann der Bordnetzstromrichter in das Teilbordnetz integriert werden. Damit ist eine Energieversorgung der elektrischen Komponenten durch die landseitige Ladestation möglich. Auf eine zusätzliche Energiequelle oder einen Energiespeicher zur Sicherstellung der Versorgung der elektrischen Komponenten des Fahrzeugs wie beispielsweise eine zusätzliche Batterie oder einen Dieselgenerator kann verzichtet werden.

Bei einer weiteren vorteilhaften Ausgestaltung der Erfindung weist das Fahrzeug mindestens zwei Teilbordnetz auf, wobei die Teilbordnetze jeweils an dem Bordnetzanschluss und am Gleichspannungsanschluss miteinander elektrisch verbunden sind. Gerade für Fahrzeuge, insbesondere für Wasserfahrzeuge, ist eine redundante Energieversorgung aus dem Energiespeicher und Ladung des Energiespeichers von hoher Bedeutung, um eine hohe Zuverlässigkeit und hohe Verfügbarkeit des Fahrzeugs sicherzustellen. Gerade für ein Wasserfahrzeug ist dies für den sicheren Betrieb besonders vorteilhaft. Die Versorgung der elektrischen Komponenten des Fahrzeugs und die Ladung des Energiespeichers kann auf einfache Weise redundant mit zwei oder mehr Teilbordnetzens ausgestaltet werden. In diesem Fall können die einzelnen Komponenten der jeweiligen Teilbordnetze wie Stromrichter und Energiespeicher dann auch kleiner dimensioniert werden. Beim Beispiel von zwei Teilbordnetzen kann können der Stromrichter und die Energiespeicher beispielsweise mit halber Leistung ausgeführt sein. Tritt ein Fehlerfall in einem ersten von zwei Teilbordnetzen auf, kann der Energiespeicher des zweiten Teilbordnetzes noch geladen und der Betrieb des Fahrzeugs mit der Versorgung der elektrischen Komponenten sichergestellt werden.

Im Folgende wird die Erfindung anhand der in den Figuren dargestellten Ausführungsbeispiele näher beschreiben und erläutert. Es zeigen:
- FIG 1: ein erstes Ausführungsbeispiele für ein Ladesystem,
- FIG 2: ein zweites Ausführungsbeispiele für ein Ladesystem,
- FIG 3: ein Ladegerät mit Stromrichter und Tiefsetzsteller und
- FIG 4: ein Schiff mit einem redundanten Teilbordnetz.

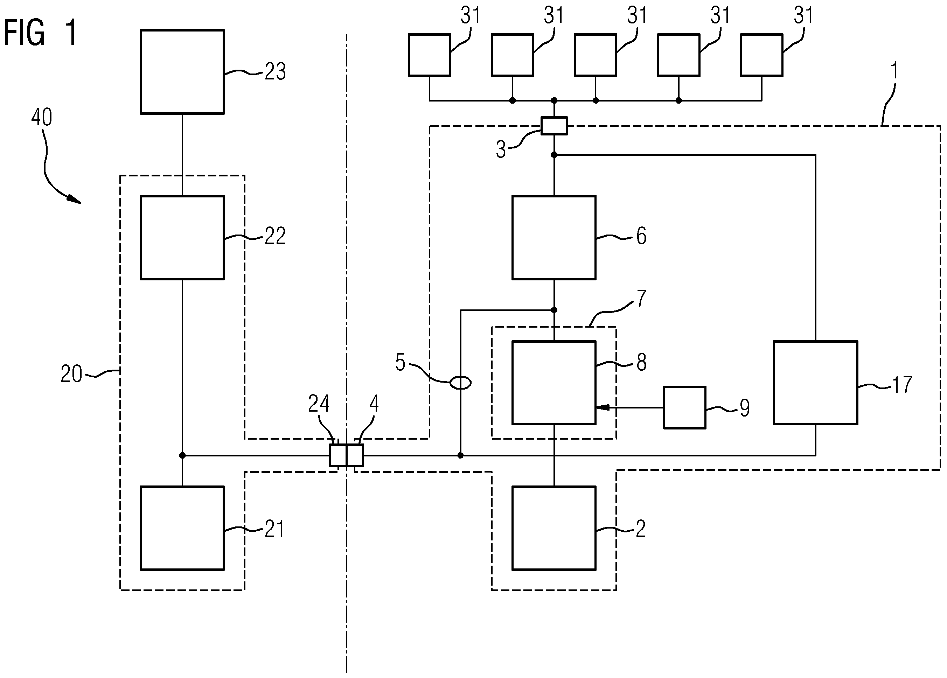

Die FIG 1 zeigt ein erstes Ausführungsbeispiel für ein Ladesystem 40. Dieses Ladesystem 40 umfasst ein Teilbordnetz 1 und eine landseitige Ladestation 20. Die landseitige Ladestation 20 weist einen landseitigen Stromrichter 22 und einen landseitigen Energiespeicher 21 auf. Da der landseitige Energiespeicher 21 an seinen Anschlüssen eine Gleichspannung aufweist, wird die Netzspannung eines Energieversorgungsnetzes 23, das zur Ladung des landseitigen Energiespeichers 21 dient, mit Hilfe des landseitigen Stromrichters 22 in eine Gleichspannung umgewandelt. Der landseitige Energiespeicher 21 dient dazu, die Belastung des Energieversorgungsnetzes 23 beim Aufladen eines hier nicht dargestellten Fahrzeugs 30 zu reduzieren. Damit nicht die gesamte Ladeleistung dem Energieversorgungsnetz 23 entnommen werden muss, wird die Energie im landseitigen Energiespeicher 21 zwischengepuffert. In der Gleichspannungsverbindung zwischen landseitigem Stromrichter 22 und landseitigem Energiespeicher 21 ist ein Abzweig zum landseitigen Gleichspannungsanschluss 24 angeordnet, der zur Verbindung mit einem Gleichspannungsanschluss 4 des Teilbordnetzes 1 des Fahrzeugs 30 vorgesehen ist. Beim Laden wird die gesamte Energie oder zumindest ein Großteil der Energie dem landseitigen Energiespeicher 21 entnommen, um die Ströme im Energieversorgungsnetz 23 gering, d.h. unter einem vorgebbaren Grenzwert, zu halten. Dadurch wird die Belastung des Energieversorgungsnetzes 23 reduziert. Dies ist gerade bei einem schwachen Netz, wie es oftmals in Küstennähe oder anderen Schiffsanlegestellen, von Vorteil, weil damit Rückwirkungen auf das Energieversorgungsnetz 23 wie beispielsweise Spannungseinbrüche, vermieden werden können.

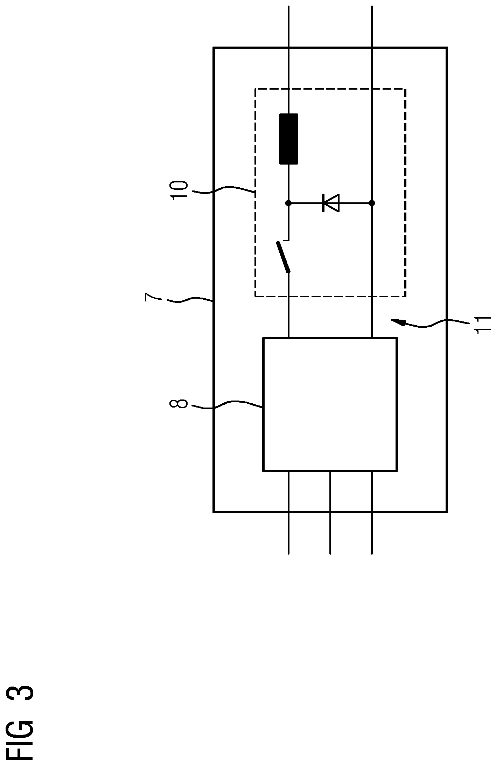

Das Teilbordnetz 1 weist einen Energiespeicher 2 auf, der von der landseitigen Ladestation 20 aufgeladen werden kann. Dazu wird das Teilbordnetz 1 an seinem Gleichspannungsanschluss 4 mit dem landseitigen Gleichspannungsanschluss 24 verbunden. Der Gleichspannungsanschluss 4 ist mit einem Energieteilnetz 5 verbunden. Das Energieteilnetz 5 kann dabei beispielsweise als Sammelschiene ausgebildet sein. Zwischen Energieteilnetz 5 und Energiespeicher 2 ist ein Stromrichter 8 angeordnet. Wechselspannungsseitig ist dieser Stromrichter 8 mit dem Energieteilnetz 5 verbunden, gleichspannungsseitig mit dem Energiespeicher 2. Während des Ladevorgangs wird das Energieteilnetz 5 als Gleichspannungsnetz betrieben und der Stromrichter 8 steuert oder regelt den Ladevorgang des Energiespeichers 2. Der Stromrichter 8 ist in diesem Ausführungsbeispiel Teil eines Ladegerätes 7. Dabei kann der Energiespeicher 2 direkt mit dem Zwischenkreis des Stromrichters 8 verbunden sein. Alternativ ist es auch möglich, dass zwischen dem Zwischenkreis des Stromrichters 8 und dem Energiespeicher 2 weitere Komponenten wie beispielsweise ein Tiefsetzsteller angeordnet sein. Eine solche Anordnung wird unten in FIG 3 näher beschreiben und erläutert.

Um das Energieteilnetz 5 als Gleichspannungsnetz betreiben zu können, ist zwischen dem Bordnetzanschluss 3 und dem Energieteilnetz 5 eine Schaltvorrichtung 6 angeordnet, die den Bordnetzanschluss 3 und das Energieteilnetz 5 beispielsweise mittels eines Schalters elektrisch voneinander trennt. Da am Bordnetzanschluss 3 eine Wechselspannung zur Versorgung von elektrischen Komponenten 31 des Fahrzeugs 30 anliegt, ist es auch möglich, die Schaltvorrichtung 6 als einen weiteren Stromrichter auszuführen, der in der Lage ist, einen Energieaustausch zwischen dem Bordnetzanschluss 3 mit Wechselstrom und dem Energieteilnetz 5 mit Gleichstrom herzustellen indem er als AC/DC Steller betrieben wird.

Der Stromrichter 8 wird mittels einer Regelvorrichtung 9 gesteuert oder geregelt. Diese Regelvorrichtung 9 kann beispielsweise Teil des Ladegerätes 7 sein oder auch, wie dargestellt, außerhalb der Ladegerätes 7 angeordnet sein.

Für den Fall, dass die Schaltvorrichtung 6 als Schalter ausgebildet ist und während des Ladevorgangs den Bordnetzanschluss 3 vom Energieteilnetz 5 trennt, hat es sich als vorteilhaft erwiesen, einen Bordnetzstromrichter 17 zwischen Energieteilnetz 5 und Bordnetzanschluss 3 anzuordnen, der während des Ladevorgangs die elektrischen Komponenten 31 des Fahrzeugs 30 mit elektrischer Energie versorgt. Somit kann auf Energiequellen, wie beispielsweise einen Dieselgenerator bei Schiffen, oder weitere Speicher verzichtet werden, da die Energieversorgung dann aus der landseitigen Ladestation über das Energieteilnetz 5 erfolgen kann.

Während des Ladevorgangs wird das Energieteilnetz 5 als Gleichspannungsnetz betrieben. Beim unabhängigen Betrieb, also außerhalb des Ladevorgangs, wird das Energieteilnetz 5 als Wechselspannungsnetz betrieben, das aus dem Energiespeicher 2 über den Stromrichter 8 die elektrischen Komponenten 31 des Fahrzeugs 30 mit elektrischer Energie versorgt.

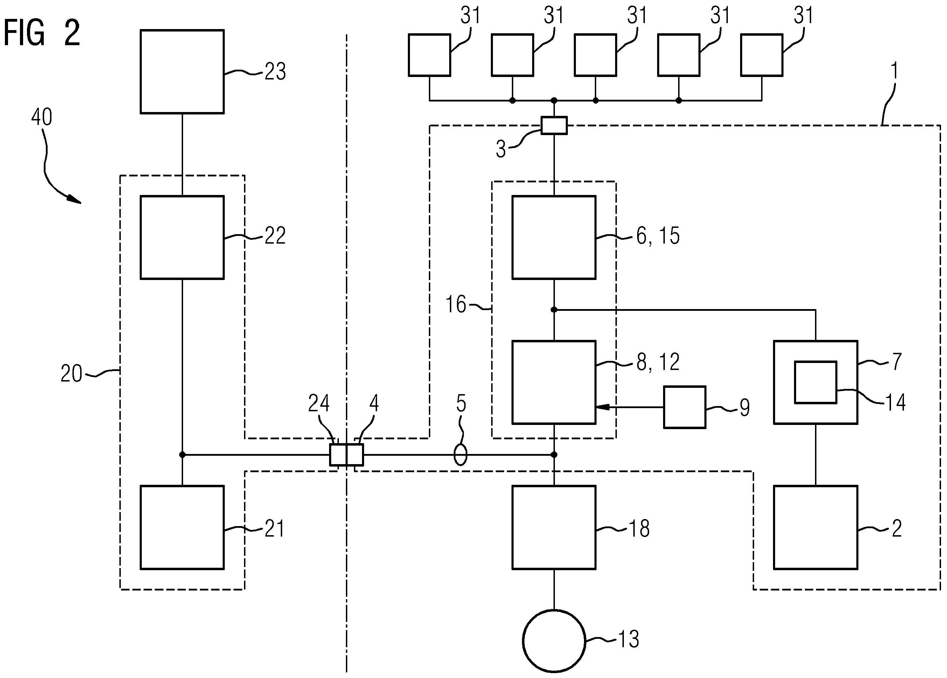

Die FIG 2 zeigt ein weiteres Ausführungsbeispiel für ein Ladesystem 40. Zur Vermeidung von Wiederholungen wird auf die Beschreibung zur FIG 1 und auf die dort eingeführten Bezugszeichen verwiesen. In diesem Ausführungsbeispiel wird der Stromrichter 8 nicht durch das Ladegerät 7, sondern durch das Antriebssystem des Fahrzeugs 30 gebildet. Das Antriebssystem umfasst einen Gleichrichter 15 und einen Wechselrichter 12 zur Speisung eines Antriebsmotors 13. Dabei bilden der Gleichrichter 15 und der Wechselrichter 12 einen Frequenzumrichter 16. Der Stromrichter 8 wird dabei durch den Wechselrichter 12 gebildet. Um Ströme und dadurch hervorgerufene Verluste im Antriebsmotor 13 zu vermeiden wird dieser während des Ladevorgangs mittels eines Motorschalters 18 vom Energieteilnetz 5 getrennt. Da das Fahrzeug 30 während des Ladevorgangs nicht angetrieben wird, ist dies jedoch kein Nachteil, sondern ein Vorteil, da der Wechselrichter 15 beim Laden vorteilhaft für die Ladung des Fahrzeugs 30 genutzt werden kann. Der Energiespeicher 2 ist in diesem Ausführungsbeispiel über ein Ladegerät 7 mit dem Zwischenkreis des Frequenzumrichters 16, also an der Verbindung zwischen Wechselrichter 12 und Gleichrichter 15 angeordnet. Die Steuerung bzw. Regelung des Aufladevorgangs kann dabei vom Stromrichter 8 oder vom Ladegerät 7 vorgenommen werden.

Die Schaltvorrichtung 6 wird in diesem Ausführungsbeispiel durch den Gleichrichter 15 gebildet. Dieser kann entweder den Bordnetzanschluss 3 vom Energieteilnetz 5 trennen oder, sofern der Gleichrichter 15 schaltbare Halbleiter aufweist, auch die Wechselspannung des Bordnetzanschlusses 3 mit der Gleichspannung des Energieteilnetzes 5 verbinden und eine Energieübertragung zwischen diesen Punkten sicherstellen. Auch in diesem Ausführungsbeispiel wird während des Ladevorgangs das Energieteilnetz 5 als Gleichspannungsnetz und beim unabhängigen Betrieb als Wechselspannungsnetz betrieben. Durch die Verwendung des Gleichrichters 15 als Schaltvorrichtung erübrigt sich in den Fällen, in denen der Gleichrichter 15 schaltbare Halbleiter aufweist, ein Bordnetzumrichter 17, so dass dieser in diesem Ausführungsbeispiel nicht dargestellt ist. Optional ist der Bordnetzumrichter 17 auch in dieses Ausführungsbeispiel zwischen Energieteilnetz 5 und Bordnetzanschluss 3 einfügbar, um die elektrischen Komponenten 31 während des Ladevorgangs aus dem Energieteilnetz 5 mit Energie zu versorgen.

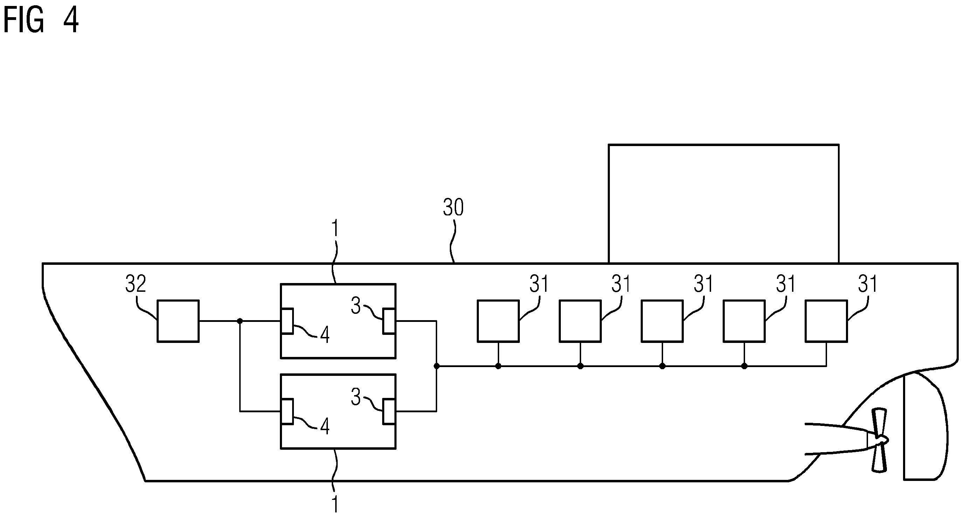

Die FIG 3 zeigt ein Ausführungsbeispiel eines Ladegerätes 7, das einen Stromrichter 8 und daran gleichspannungsseitig angeschlossen einen Tiefsetzsteller 10 aufweist. Dieses Ladegerät 7 kann im Ausführungsbeispiel der FIG 1 zum Einsatz kommen, damit der Energiespeicher 2 unabhängig von der Spannungshöhe am Gleichspannungsanschluss 4 geladen werden kann. Die FIG 4 zeigt ein Fahrzeug 30, in diesem Ausführungsbeispiel ausgebildet als Wasserfahrzeug. Aus Redundanzgründen weist dieses Fahrzeug 30 zwei Teilbordnetze 1 auf, deren Anschlüsse 4 mit einem Ladeanschluss 32 verbunden sind. Ebenso können die elektrischen Komponenten 31 des Fahrzeugs aus beiden Teilbordnetzen 1 vorsorgt werden, da die Bordnetzanschlüsse 3 parallel angeordnet sind und dadurch miteinander verbunden sind.

Zusammenfassend betrifft die Erfindung ein Teilbordnetz für ein Fahrzeug, insbesondere für ein Wasserfahrzeug, wobei das Teilbordnetz mindestens einen Energiespeicher und eine Regelvorrichtung zur Ladung der Energiespeicher des Fahrzeugs aufweist. Zur Verbesserung der Ladung des Energiespeichers wird vorgeschlagen, dass das Teilbordnetz ferner einen Bordnetzanschluss zur Verbindung mit elektrischen Komponenten des Fahrzeugs, einen Gleichspannungsanschluss zur Verbindung mit einer landseitigen Ladestation und ein Energieteilnetz aufweist, wobei zwischen dem Bordnetzanschluss und dem Energieteilnetz eine Schaltvorrichtung angeordnet ist, wobei zwischen dem Energiespeicher und dem Energieteilnetz ein Ladegerät angeordnet ist, wobei der Gleichspannungsanschluss mit dem Energieteilnetz elektrisch leitend verbunden ist, wobei das Teilbordnetz mindestens einen Stromrichter aufweist, der wechselspannungsseitig mit dem Energieteilnetz verbunden ist und sowohl als AC/DC Steller als auch als DC/DC Steller betreibbar ist, wobei der Stromrichter mittels der Regelvorrichtung eingerichtet ist, während des Ladevorgangs das Energieteilnetz als Gleichspannungsnetz und während des unabhängigen Betriebs des Fahrzeugs als Wechselspannungsnetz zu betreiben. Die Erfindung betrifft ferner ein Fahrzeug mit einem derartigen Teilbordnetz, eine landseitige Ladestation, sowie ein Ladesystem. Weiter betrifft die Erfindung ein Verfahren zum Betreiben eines derartigen Teilbordnetzes oder eines derartigen Fahrzeugs oder eines derartigen Ladesystems, wobei während eines Ladevorgangs der Stromrichter als DC/DC Steller und während des unabhängigen Betriebs als AC/DC Steller betrieben wird.

## Patentansprüche

1. Teilbordnetz (1) für ein Fahrzeug (30), insbesondere für ein Wasserfahrzeug, wobei das Teilbordnetz (1)
- mindestens einen Energiespeicher (2),
- eine Regelvorrichtung (9) zur Ladung der Energiespeicher (2) des Fahrzeugs (30),
- einen Bordnetzanschluss (3) zur Verbindung mit elektrischen Komponenten (31) des Fahrzeugs (30),
- einen Gleichspannungsanschluss (4) zur Verbindung mit einer landseitigen Ladestation (20) und
- ein Energieteilnetz (5) aufweist,
wobei zwischen dem Bordnetzanschluss (3) und dem Energieteilnetz (5) eine Schaltvorrichtung (6) angeordnet ist, wobei zwischen dem Energiespeicher (2) und dem Energieteilnetz (5) ein Ladegerät (7) angeordnet ist, wobei der Gleichspannungsanschluss (4) mit dem Energieteilnetz (5) elektrisch leitend verbunden ist, wobei das Teilbordnetz (1) mindestens einen Stromrichter (8) aufweist, der wechselspannungsseitig mit dem Energieteilnetz (5) verbunden ist und sowohl als AC/DC Steller als auch als DC/DC Steller betreibbar ist, wobei der Stromrichter (8) mittels der Regelvorrichtung (9) eingerichtet ist, während des Ladevorgangs das Energieteilnetz (5) als Gleichspannungsnetz und während des unabhängigen Betriebs des Fahrzeugs (20) als Wechselspannungsnetz zu betreiben.

2. Teilbordnetz (1) nach Anspruch 1, wobei der Stromrichter (8) im Ladegerät (7) angeordnet ist.

3. Teilbordnetz (1) nach Anspruch 2, wobei im Ladegerät (7) ein Tiefsetzsteller (10) derart an einem Zwischenkreis (11) des Stromrichters (8) angeordnet ist, dass der Tiefsetzsteller (10) eine am Zwischenkreis (11) anliegende Spannung in eine kleinere Spannung am Energiespeicher (2) umwandelt.

4. Teilbordnetz (1) nach Anspruch 1, wobei das Teilbordnetz (1) einen Wechselrichter (12) zur Speisung eines Antriebsmotors (13) aufweist, wobei der Stromrichter (8) durch den Wechselrichter (12) gebildet wird.

5. Teilbordnetz (1) nach Anspruch 4, wobei das Ladegerät (7) einen Gleichstromsteller (14) aufweist.

6. Teilbordnetz (1) nach einem der Ansprüche 4 oder 5, wobei das Teilbordnetz (1) einen Gleichrichter (15) aufweist, der mit dem Wechselrichter (12) einen Frequenzumrichter (16) zur Speisung des Antriebsmotors (13) bildet, wobei der Gleichrichter (15) die Schaltvorrichtung (6) bildet.

7. Teilbordnetz (1) nach einem der Ansprüche 1 bis 6, wobei zwischen dem Energieteilnetz (5) und dem Bordnetzanschluss (3) ein Bordnetzstromrichter (17) angeordnet ist.

8. Fahrzeug (20), insbesondere ein Wasserfahrzeug, mit mindestens einem Teilbordnetz (1) nach einem der Ansprüche 1 bis 7.

9. Fahrzeug (20) nach Anspruch 8, wobei das Fahrzeug (20) mindestens zwei Teilbordnetz (1) aufweist, wobei die Teilbordnetze (1) jeweils an dem Bordnetzanschluss (3) und am Gleichspannungsanschluss (4) miteinander elektrisch verbunden sind.

10. Landseitige Ladestation (20), aufweisend
- einen landseitigen Energiespeicher (21) und
- einen landseitigen Stromrichter (22),
wobei in einer elektrischen Verbindung zwischen dem landseitigen Energiespeicher (21) und dem landseitigen Stromrichter (22) ein landseitiger Gleichspannungsanschluss (24) zur Verbindung mit dem Gleichspannungsanschluss (4) eines Teilbordnetzes (1) nach einem der Ansprüche 1 bis 7 oder eines Fahrzeugs (20) nach einem der Ansprüche 8 oder 9 angeordnet ist, wobei die über den landseitige Stromrichter (21) übertragbare Leistung kleiner ist als die über den landseitiger Gleichspannungsanschluss (24) übertragbare Dauerleistung.

11. Ladesystem (40) aufweisend
- ein Teilbordnetz (1) nach einem der Ansprüche 1 bis 7 oder ein Fahrzeug (30) nach einem der Anspruch 8 oder 9 und
- eine landseitige Ladestation (20) nach Anspruch 10,
wobei der landseitige Gleichspannungsanschluss (24) der landseitigen Ladestation (20) mit dem Gleichspannungsanschluss (4) des Teilbordnetzes (1) elektrisch verbunden ist.

12. Verfahren zum Betreiben eines Teilbordnetzes (1) nach einem der Ansprüche 1 bis 7 oder eines Fahrzeugs (20) nach einem der Ansprüche 8 oder 9 oder eines Ladesystems (40) nach Anspruch 11, wobei während eines Ladevorgangs der Stromrichter (8) als DC/DC Steller und während des unabhängigen Betriebs als AC/DC Steller betrieben wird.

13. Verfahren nach Anspruch 12, wobei die von der landseitigen Ladestation (20) übertragene Leistung mittels des Stromrichters (8), des Tiefsetzstellers (10) gemäß Anspruch 3 oder des Gleichstromstellers (14) gemäß Anspruch 5 geregelt wird.

14. Verfahren nach einem der Ansprüche 12 oder 13, wobei während des Ladevorgangs die Schaltvorrichtung (6) geöffnet ist.

15. Verfahren nach einem der Ansprüche 12 bis 14, wobei während des Ladevorgangs elektrische Komponenten (31) des Fahrzeugs (30) mittels des Bordnetzstromrichters (17) gemäß Anspruch 7 aus dem Energieteilnetz (5) mit elektrischer Energie versorgt werden.
